# EUROPÄISCHE PATENTANMELDUNG

(11) **EP 1 834 762 A2**
(43) Veröffentlichungstag der Anmeldung: **19.09.2007**
(21) Anmeldenummer: 07004832.7
(22) Anmeldetag: 08.03.2007
(51) Int. Cl.: B32B 25/14, B32B 27/32

(54) **Mehrschichtige Baufolie**

(30) Priorität: 16.03.2006 AT 4462006
(71) Anmelder: Tec-Joint AG, 6467 Schattdorf (CH)
(72) Erfinder: Arnold, Joder, 6467 Schattdorf (CH)
(74) Vertreter: Hofmann, Ralf U.

(57) **Zusammenfassung**

Bei einer mehrschichtigen Baufolie mit mindestens einer inneren Schicht (1) aus einem Elastomer oder Thermoplast, auf deren beiden Seiten jeweils mindestens eine weitere Schicht angeordnet ist, ist auf beiden Seiten der mindestens einen Schicht (1) aus Elastomer oder Thermoplast jeweils eine Schicht (2) aus Polypropylen (PP) angeordnet, die von einer UV-Schutzschicht (3) abgedeckt ist, welche jeweils eine äußere Oberfläche (5) der Baufolie bildet. Die Polypropylen-Schichten (2) und die UV-Schutzschichten (3) weisen jeweils eine Perforation mit einer Mehrzahl von Kanälen (4) auf, wobei die Perforationskanäle (4) zumindest teilweise, vorzugsweise vollständig, mit dem Elastomer oder Thermoplast der mindestens einen inneren Schicht (1) aus Elastomer oder Thermoplast gefüllt sind.

## Beschreibung

Die vorliegende Erfindung betrifft eine mehrschichtige Baufolie mit mindestens einer inneren Schicht aus einem Elastomer oder Thermoplast, auf deren beiden Seiten jeweils mindestens eine weitere Schicht angeordnet ist, und ein Verfahren zur Herstellung einer solchen erfindungsgemäßen mehrschichtigen Baufolie.

Baufolien und Verfahren zu deren Herstellung sind bekannt. Beispielsweise ist eine Baufolie mit einer einzigen Schicht aus einem Elastomer mit einer Perforation aus einer Mehrzahl von Kanälen bekannt. Die Perforationskanäle einer derartigen Baufolie sind infolge der Elastizität des Elastomers nahezu völlig verschlossen. Die Perforation dient bei solchen Baufolien dazu, den Diffusionssperrwert in die gewünschte Richtung zu verändern. Ein Nachteil derartiger Baufolien ist es, dass das Elastomer bei seiner Lagerung Stoffe an seine Oberfläche ausscheidet, welche die Verklebbarkeit von Bahnen und Stücken solcher Baufolien wesentlich verschlechtern kann.

Auch mehrschichtige Baufolien und Verfahren zu deren Herstellung sind bereits bekannt. Beispielsweise ist eine mehrschichtige Baufolie aus einer Elastomer-Schicht mit einer ein- oder beidseitigen Vliesauflage bekannt. Derartige mehrschichtige Baufolien sind zwar fest und leichter verklebbar, weisen jedoch nur in einer Richtung eine gute Dehnbarkeit auf.

Baufolien werden beispielsweise als Dampfsperren, beispielsweise beim Hausbau, eingesetzt.

Aufgabe der vorliegenden Erfindung ist es, eine mehrschichtige Baufolie mit einer guten Lagerfähigkeit und guten Verarbeitungseigenschaften und ein Verfahren zu deren Herstellung bereit zu stellen.

Diese Aufgabe wird durch eine Baufolie mit den Merkmalen des Patentanspruchs 1 gelöst. Hierbei ist bei einer Baufolie der eingangs genannten Art auf beiden Seiten der mindestens einen inneren Schicht aus Elastomer oder Thermoplast jeweils eine Schicht aus Polypropylen (PP) angeordnet, die von einer UV-Schutzschicht abgedeckt ist, welche jeweils eine äußere Oberfläche der Baufolie bildet. Die Polypropylen-Schichten und die UV-Schutzschichten weisen jeweils eine Perforation mit einer Mehrzahl von Kanälen auf, wobei die Perforationskanäle beispielsweise jeweils an den Eckpunkten eines quadratischen oder rechteckigen Gitternetzes angeordnet sind. Die Perforationskanäle sind zumindest teilweise mit dem Elastomer oder Thermoplast der inneren Schicht aus Elastomer oder Thermoplast gefüllt.

Vorteilhafterweise weist eine erfindungsgemäße Baufolie eine gute Lagerfähigkeit auf. Die Polypropylen-Schichten wirken einer Ausscheidung von Stoffen aus der inneren Schicht aus Elastomer oder Thermoplast an die äußere Folienoberfläche entgegen. Dabei werden die nicht UV-resistenten Polypropylen-Schichten wiederum durch die UV-Schutzschichten vor schädlicher UV-Einwirkung geschützt.

Weiters werden durch eine erfindungsgemäße Baufolie gute Verarbeitungseigenschaften realisiert. Polypropylen-Schichten würden sich mit handelsüblichen Baustoff-Klebern nicht gut verkleben lassen, durch die Beschichtung der Polypropylen-Schichten mit UV-Schutzschichten kann aber eine gute Verklebbarkeit erreicht werden.

Weiters kann eine erfindungsgemäße mehrschichtige Baufolie vorteilhafterweise in Längs- und in Querrichtung eine im Wesentlichen gleich gute Dehnbarkeit aufweisen, wodurch sich Verarbeitungsvorteile ergeben.

Durch die Auswahl eines geeigneten Elastomers bzw. Thermoplasts der inneren Schicht und durch eine entsprechende Ausbildung der Perforation, insbesondere eine geeignete Wahl der Perforationsgeometrie - wie Abstand der Eckpunkte des Gitternetzes und/oder Durchmesser der Perforationskanäle, kann der sd-Wert an die gewünschte Bau-Anwendung angepasst werden. In dieser Weise können Baufolien mit passenden sd-Werten realisiert werden, beispielsweise Baufolien mit sd-Werten im Bereich von weniger als 1 m bis 150 m.

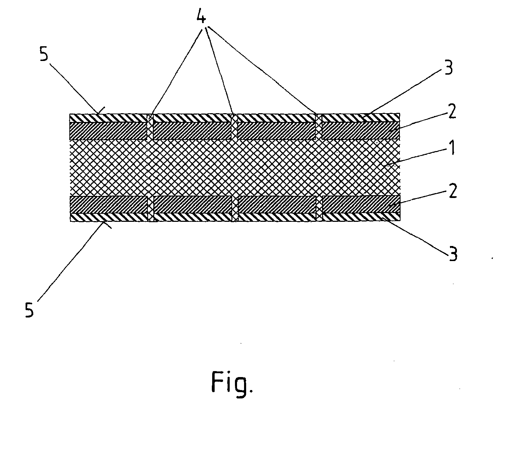

Weitere Vorteile und Einzelheiten der Erfindung werden im Folgenden anhand der beiliegenden Zeichnung erläutert. In dieser zeigt die einzige Fig. einen schematischen Querschnitt (nicht maßstäblich) durch ein Ausführungsbeispiel einer erfindungsgemäßen mehrschichtigen Baufolie entlang einer Reihe von Perforationskanälen.

Die dargestellte Ausführungsform der mehrschichtigen Baufolie weist eine einzelne innere Schicht 1 aus Elastomer oder Thermoplast auf. Diese Schicht 1 aus Elastomer oder Thermoplast dient quasi als tragender Grundkörper für die anderen Schichten der mehrschichtigen Baufolie.

Auf beiden Seiten der inneren Schicht 1 aus Elastomer oder Thermoplast ist jeweils eine Schicht 2 aus Polypropylen (PP) angeordnet. Die beiden Polypropylen-Schichten 2 wirken einem Ausscheiden von Stoffen aus der inneren Schicht 1 aus Elastomer oder Thermoplast, welche eine Verklebung nachteilig beeinflussen könnten, an die äußere Folienoberfläche entgegen.

Die beiden Polypropylen-Schichten 2 werden jeweils von einer UV-Schutzschicht 3 abgedeckt. Jede dieser beiden UV-Schutzschichten 3 bildet eine äußere Oberfläche 5 der Baufolie. Die UV-Schutzschichten 3 schützen die nicht UV-resistenten Polypropylen-Schichten 2 vor schädlicher, weil die Haltbarkeit der Baufolie verringernder UV-Strahlung. Weiters können die UV-Schutzschichten 3 zweier Folienbahnen oder-stücke einfach, fest und dauerhaft miteinander verklebt werden. Dabei ist es von besonderem Vorteil, dass auch mit handelsüblichen Baustoff-Klebern eine einfache, feste und dauerhafte Verklebung von Folienbahnen oder - stücken gelingt.

Es ist denkbar und möglich, dass die mehrschichtige Baufolie anstatt einer einzigen inneren Schicht 1 aus Elastomer oder Thermoplast in ihrem Folieninnenraum ein Sandwich aus mehreren Schichten umfasst, beispielsweise ein aus verschiedenen Elastomer-und/oder Thermoplast-Arten und/oder ein aus mindestens einer Schicht aus Elastomer oder Thermoplast und mindestens einer Schicht aus einem anderen Material, z.B. Polypropylen, aufgebautes Sandwich.

Wie dies aus den Fig. ersichtlich ist, bestehen die innere Schicht 1 und die auf beiden Seiten der inneren Schicht angeordneten Polypropylen-Schichten 2 aus vollem Material, also nicht aus einzelnen Fasern.

Die Polypropylen-Schichten 2 und die UV-Schutzschichten 3 weisen jeweils eine Perforation mit einer Mehrzahl von Kanälen 4 auf. Die Perforation stellt eine direkte Verbindung der inneren Schicht 1 aus Elastomer oder Thermoplast mit dem Folienaußenraum her. Durch die Perforation in Verbindung mit der Auswahl eines geeigneten Elastomers oder Thermoplasts lässt sich der sd-Wert der Baufolie auf einen der jeweiligen Bau-Anwendung angepassten Wert einstellen.

Bei einer mehrschichtigen Baufolie mit einem Sandwich aus mehreren Schichten in ihrem Inneren, könnten analog alle Schichten mit Ausnahme der inneren Schicht(en) 1 aus Elastomer oder Thermoplast jeweils eine Perforation mit einer Mehrzahl von Kanälen 4 aufweisen.

Bei der gezeigten Ausführungsform sind die Perforationskanäle 4 mit dem Elastomer oder Thermoplast der inneren Schicht 1 aus Elastomer oder Thermoplast vollständig gefüllt. Die Perforationskanäle 4 könnten auch nur teilweise mit dem Elastomer oder Thermoplast gefüllt sein.

Es ist bevorzugt, dass die Perforationskanäle 4 einen Durchmesser im Bereich von 1 bis 5 mm aufweisen.

Vorteilhafterweise werden die UV-Schutzschichten 3 von einer Farbschicht gebildet, welche in einfacher Weise durch Bedrucken aufbringbar ist. Auch Farbcodierungen und Aufdrucke, beispielsweise Beschriftungen, können in dieser Weise realisiert werden.

Beispielsweise ist die Farbe der UV-Schutzschichten 3 auf einer Nitrozellulose-Basis mit darin eingemischten Farbpigmenten aufgebaut. Dadurch ergibt sich ein wirksamer UV-Schutz für die abgedeckten Polypropylen-Schichten 2 und gleichzeitig ist eine einfache, feste und dauerhafte Verklebung von Baufolienbahnen oder-stücken mit handelsüblichen Baustoff-Klebern möglich.

Die Werkstoffe, aus denen die innere Schicht 1 bestehen kann, beginnen vorteilhafterweise bei höheren Temperaturen plastisch zu werden, sie beginnen zu fließen. Die Werkstoffe der inneren Schicht 1 können bei der Herstellung der Baufolie, insbesondere wenn sie durch erhöhten Druck und/oder erhöhte Temperatur in ihren plastischen bzw. fließenden Zustand gebracht wurden, in kontrollierter Weise in die Perforationskanäle 4 eingebracht werden.

Die innere Schicht 1 besteht beispielsweise aus Butylkautschuk (IIR), aus Ethylen-Propylen-Dien-Kautschuk (EPDM) oder Ethylen-Propylen-Kautschuk (EP). Butylkautschuk kann beispielsweise für eine Baufolie zur Verwendung als Dampfsperre rauminnenseitig an einer Gebäudewand eingesetzt werden ("Indoor-Folie"), wobei in Verbindung mit den Perforationen ein sd-Wert im Bereich von 70 m bis 100 m ausgebildet werden kann.

EPDM kann beispielsweise für eine Baufolie zur Verwendung an der Gebäudeaußenseite einer Gebäudewand eingesetzt werden ("Outdoor-Folie"), wobei in Verbindung mit den Perforationen ein sd-Wert im Bereich 5 m bis 20 m ausgebildet werden kann.

Wird die innere Schicht 1 aus Thermoplast ausgebildet, so ist hierbei ein thermoplastisches Elastomer bevorzugt.

Für die Polypropylen-Schichten 2 ist jeweils eine Schichtdicke im Bereich von 30 bis 100 µm vorteilhaft, eine Schichtdicke von 50 µm ist bevorzugt. Für die UV-Schutzschichten 3 ist jeweils ein Schichtauftrag im Bereich von 2 bis 10 g/m² (nass) vorteilhaft, ein Schichtauftrag von 5 g/ m² (nass) ist bevorzugt.

Für die innere Schicht 1 aus Elastomer oder Thermoplast ist eine Schichtdicke im Bereich von 0,3 bis 2 mm vorteilhaft. Als praktisch vorteilhaft für die Abstände der Gitternetz-Eckpunkte, an denen die Perforationskanäle 4 angeordnet sind, hat sich ein Wert im Bereich von 4 x 4 bis 10 x 10 mm herausgestellt.

Außer ihrer Verwendung als Dampfsperre kann eine erfindungsgemäße mehrschichtige Baufolie beispielsweise auch als Entkoppelung und/oder als Abdichtung zwischen einem Unterboden und einem von darauf angeordneten Bodenbelag, z.B. Fliesen. Hierbei kann auch eine Folie ohne Perforation zum Einsatz kommen.

Das Verfahren zur Herstellung der erfindungsgemäßen Baufolie umfasst vorteilhafter Weise einen Herstellungsschritt, bei dem auf eine jeweilige Polypropylen-Schicht 2 eine UV-Schutzschicht 3 vor dem Perforieren aufgetragen wird, vorzugsweise durch Bedrucken. Andere Arten von Auftragungen sind denkbar und möglich, z.B. Besprühen.

Nach dem Perforieren (= Durchstechen mittels Nadeln oder Stiften, die z. B. an einer Walze angeordnet sind) der Polypropylen-Schichten 2 und der UV-Schutzschichten 3 werden diese Schichten mit der inneren Schicht 1 aus Elastomer oder Thermoplast zusammengeführt, vorzugsweise mit Hilfe von Walzen. Die zusammenzuführenden Schichten können beim Zusammenführen mit Druck beaufschlagt werden. Besonders vorteilhaft ist es, wenn die zusammenzuführenden Schichten beim Zusammenführen zusätzlich auf eine erhöhte Temperatur gebracht werden, vorzugsweise auf eine Temperatur im Bereich von 70° bis 160°C, z.B. ca. 120° C. Auf diese Weise kann ein Fließen des Elastomers bzw. Thermoplasts der inneren Schicht 1 in die Kanäle 4 und einen vollständige Füllung der Kanäle 4 mit dem Elastomer oder Thermoplast erreicht werden, ohne dass dieses an der äußeren Oberfläche der Baufolie aus den Kanälen 4 herausquillt.

### Legende

### zu den Hinweisziffern:

- 1: Innere Schicht
- 2: Polypropylen-Schicht
- 3: UV-Schutzschicht
- 4: Perforationskanal
- 5: Oberfläche

## Patentansprüche

1. Mehrschichtige Baufolie mit mindestens einer inneren Schicht (1) aus einem Elastomer oder Thermoplast, auf deren beiden Seiten jeweils mindestens eine weitere Schicht angeordnet ist, **dadurch gekennzeichnet, dass** auf beiden Seiten der mindestens einen Schicht (1) aus Elastomer oder Thermoplast jeweils eine Schicht (2) aus Polypropylen (PP) angeordnet ist, die von einer UV-Schutzschicht (3) abgedeckt ist, welche jeweils eine äußere Oberfläche (5) der Baufolie bildet, und dass die Polypropylen-Schichten (2) und die UV-Schutzschichten (3) jeweils eine Perforation mit einer Mehrzahl von Kanälen (4) aufweisen, wobei die Perforationskanäle (4) zumindest teilweise, vorzugsweise vollständig, mit dem Elastomer oder Thermoplast der mindestens einen inneren Schicht (1) aus Elastomer oder Thermoplast gefüllt sind.

2. Mehrschichtige Baufolie nach Anspruch 1, **dadurch gekennzeichnet, dass** alle Schichten mit Ausnahme der mindestens einen inneren Schicht (1) aus Elastomer oder Thermoplast jeweils eine Perforation mit einer Mehrzahl von Kanälen (4) aufweisen.

3. Mehrschichtige Baufolie nach einem der Ansprüche 1 oder 2, **dadurch gekennzeichnet, dass** die Perforationskanäle (4) jeweils an den Eckpunkten eines Gitternetzes angeordnet sind.

4. Mehrschichtige Baufolie nach einem der Ansprüche 1 bis 3, **dadurch gekennzeichnet, dass** die Perforationskanäle (4) einen Durchmesser im Bereich von 1 bis 5 mm aufweisen.

5. Mehrschichtige Baufolie nach einem der vorstehenden Ansprüche, **dadurch gekennzeichnet, dass** die UV-Schutzschichten (3) jeweils von einer Farbschicht gebildet werden.

6. Mehrschichtige Baufolie nach Anspruch 5, **dadurch gekennzeichnet, dass** die Farbe der UV-Schutzschichten (3) auf einer Nitrozellulose-Basis mit darin eingemischten Farbpigmenten aufgebaut ist.

7. Mehrschichtige Baufolie nach einem der vorstehenden Ansprüche, **dadurch gekennzeichnet, dass** die mindestens eine innere Schicht (1) aus einem thermoplastischen Elastomer besteht.

8. Mehrschichtige Baufolie nach einem der vorstehenden Ansprüche, **dadurch gekennzeichnet, dass** die mindestens eine innere Schicht (1) aus Butylkautschuk (llR), aus Ethylen-Propylen-Dien-Kautschuk (EPDM) oder Ethylen-Propylen-Kautschuk (EP) besteht.

9. Mehrschichtige Baufolie nach einem der vorstehenden Ansprüche, **dadurch gekennzeichnet, dass** die Polypropylen-Schichten (2) aus Cast-Polypropylen (CPP) bestehen.

10. Mehrschichtige Baufolie nach einem der vorstehenden Ansprüche, **dadurch gekennzeichnet, dass** die Polypropylen-Schichten (2) jeweils eine Schichtdicke im Bereich von 30 bis 100 µm aufweisen.

11. Mehrschichtige Baufolie nach einem der vorstehenden Ansprüche, **dadurch gekennzeichnet, dass** die UV-Schutzschichten (3) jeweils einen Schichtauftrag im Bereich von 2 bis 10 g/m² nass aufweisen.

12. Mehrschichtige Baufolie nach einem der vorstehenden Ansprüche, **dadurch gekennzeichnet, dass** die mindestens eine innere Schicht (1) aus Elastomer oder Thermoplast eine Schichtdicke im Bereich von 0,3 bis 2 mm aufweist.

13. Mehrschichtige Baufolie nach einem der vorstehenden Ansprüche, **dadurch gekennzeichnet, dass** nur eine einzige innere Schicht (1) aus Elastomer oder Thermoplast vorhanden ist, an welche die beiden Polypropylen-Schichten (2) unmittelbar angrenzen.

14. Verfahren zur Herstellung einer mehrschichtigen Baufolie nach einem der Ansprüche 1 bis 13, **dadurch gekennzeichnet, dass** die UV-Schutzschichten (3) vor dem Perforieren der Polypropylen-Schichten (2) auf diese aufgetragen werden, vorzugsweise durch Bedrucken.

15. Verfahren zur Herstellung einer mehrschichtigen Baufolie nach Anspruch 14, **dadurch gekennzeichnet, dass** nach dem Perforieren der Polypropylen-Schichten (2) und der UV-Schutzschichten (3) diese Schichten mit der mindestens einen inneren Schicht (1) aus Elastomer oder Thermoplast zusammengeführt werden, vorzugsweise mit Hilfe von Walzen.

16. Verfahren zur Herstellung einer mehrschichtigen Baufolie nach Anspruch 14 oder 15, **dadurch gekennzeichnet, dass** die zusammenzuführenden Schichten beim Zusammenführen mit Druck beaufschlagt werden.

17. Verfahren zur Herstellung einer mehrschichtigen Baufolie nach einem der Ansprüche 14 bis 16, **dadurch gekennzeichnet, dass** die zusammen zu führenden Schichten beim Zusammenführen zusätzlich auf eine erhöhte Temperatur, vorzugsweise auf eine Temperatur im Bereich von 70° bis 160° C, gebracht werden.
